# EUROPEAN PATENT SPECIFICATION

(11) **EP 3 131 264 B1**
(45) Date of publication and mention of the grant of the patent: **01.08.2018**
(21) Application number: 14890093.9
(22) Date of filing: 26.04.2014
(51) Int. Cl.: H04L 29/08

(54) **METHOD, DEVICE AND SYSTEM FOR ESTABLISHING COMMUNICATION**
VERFAHREN, VORRICHTUNG UND SYSTEM ZUR KOMMUNIKATIONSHERSTELLUNG
PROCÉDÉ, DISPOSITIF ET SYSTÈME POUR ÉTABLIR UNE COMMUNICATION

(43) Date of publication of application: 15.02.2017
(73) Proprietor: Huawei Technologies Co., Ltd., Longgang District Shenzhen, Guangdong 518129 (CN)
(72) Inventor: CHEN, Xi, Shenzhen Guangdong 518129 (CN)
(74) Representative: Epping - Hermann - Fischer
(86) International application number: PCT/CN2014/076304
(87) International publication number: WO 2015/161521

(56) References cited:
- CN-A- 101 504 699
- CN-A- 102 387 180
- CN-A- 103 701 835
- CN-A- 103 701 835
- CN-A- 104 067 596
- US-A1- 2009 300 186
- US-A1- 2009 305 700

## Description

### TECHNICAL FIELD

The present invention relates to the device field, and in particular, to a communication establishment method, a device, and a system.

### BACKGROUND

Contact information of a user such as a telephone number is personal information of the user in essence, and with technological development and scientific progress, the contact information such as a telephone number further carries increasingly more personal information of a user. In addition, with increasingly frequent contact and the rise of a series of new lifestyles such as online shopping, increasingly more organizations and people need to acquire contact information of users. Acquiring contact information of a user is acquiring personal information of the user, some of which may even be private information. If the personal information is not handled properly, the personal information of the user may be disclosed, which brings troubles to user's life. Particularly, if the personal information falls into the hands of a lawbreaker, benefit of the user is greatly damaged, which causes fear and aversion of the user to technologies, and then affects technological application and progress.

Document CN103701835A relates to a browser based converged communication establishing method and a converged communication system. The method comprises the following steps: a converged communication application unit receives user identification from a contact, and sends the user identification to a converged communication server to address; the converged communication server acquires a user identification corresponding to the registered communication modes of the contact identified by the user identification as well as the current online state, determines the communication mode with the possibility of establishing communication connection, and returns the communication mode to a browser; the browser receives a communication request in the selected communication mode selected by an initiating user, and forwards the communication request to the converged communication server; the converged communication server acquires the user identification of the initiating user and the contact under the communication mode, and calls a communication system corresponding to the communication mode selected by the initiating user, in order to establish communication connection between the initiating user and the contact by the selected communication mode. The browser based converged communication establishing method can implement converged communication among the multiple communication modes.

Document US2009/0305700A1 relates to a mobile communication terminal (T) comprising connection means (MCN) for connecting to access networks (N1, N2) and registration means (MREG) for periodically transmitting registration messages to a signaling server (SS) located within a public communication network (PUB) connected to these access networks. It is characterized by a memory (MMEM) capable of associating a validity period with at least some of the access networks, and in that the registration means (MREG) are provided for transmitting registration messages with a periodicity equal to the validity period associated with the access network (N1, N2) to which the terminal (T) is connected.

### SUMMARY

Communication establishment methods, a device comprising a communication establishment message sending unit and a server comprising a communication establishment unit according to the independent claims are provided. Dependent claims provide preferred embodiments. Embodiments of the present invention provide a communication establishment method, a device, a server, and a system, which are used to resolve a technical problem in the prior art that benefit of a user is damaged, and technological application and progress are affected because leakage of contact information of the user causes leakage of personal information of the user. Therefore, beneficial effects of protecting the personal information of the user and facilitating technological application and progress are brought.

According to a first aspect, a communication establishment method is provided, and the method includes: sending, by a first device, a query message to a server according to a second user identifier, where the query message is used by the server to query at least one communication capability of a user corresponding to the second user identifier; receiving, by the first device, a session menu sent by the server according to the query message, where the session menu is used to present the at least one communication capability of the user corresponding to the second user identifier; sending, by the first device, a communication establishment message to the server according to the session menu, where the communication establishment message includes information about the selected at least one communication capability; and communicating, by the first device by means of communication established by the server according to the selected at least one communication capability, with the user corresponding to the second user identifier; or establishing, by the first device according to the selected at least one communication capability, communication with the user corresponding to the second user identifier.

In a first possible implementation manner of the first aspect, the method further includes: sending, by the first device, a registration message to the server, where the registration message includes user identity information and at least one communication number of a user; and receiving, by the first device, a first user identifier generated by the server according to the registration message.

With reference to the first possible implementation manner of the first aspect, in a second possible implementation manner of the first aspect, the registration message further includes validity period information; or the first device sends validity period information to the server, after the first device receives the first user identifier generated by the server according to the registration message, where the validity period information is used by the server to set a validity period for the first user identifier.

With reference to the first possible implementation manner of the first aspect or the second possible implementation manner of the first aspect, in a third possible implementation manner of the first aspect, the session menu is used to present at least one communication capability possessed by both the user corresponding to the first user identifier and the user corresponding to the second user identifier.

According to a second aspect, a communication establishment method is provided, and the method includes: querying, by a server according to a received query message sent by a first device according to a second user identifier, validity period information of the second user identifier and at least one communication capability of a user corresponding to the second user identifier, where the validity period information is used to determine whether the second user identifier falls within a validity period; if the second user identifier falls within the validity period, generating, by the server, a session menu according to the queried at least one communication capability of the user corresponding to the second user identifier, where the session menu is used to present the at least one communication capability of the user corresponding to the second user identifier; sending, by the server, the session menu to the first device; and establishing, by the server according to a received communication establishment message sent by the first device according to the session menu, communication between the first device and the user corresponding to the second user identifier, where the communication establishment message includes the at least one communication capability selected by the first device.

In a first possible implementation manner of the second aspect, the method further includes: if the second user identifier falls beyond the validity period, sending, by the server, a reminder message to the first device, where the reminder message is used to remind the first device that the second user identifier falls beyond the validity period; or if the second user identifier falls beyond the validity period, sending, by the server, a request message to the user corresponding to the second user identifier, where the request message is used to request the user corresponding to the second user identifier to allow the server to establish communication between the first device and the user corresponding to the second user identifier.

With reference to the second aspect or the first possible implementation manner of the second aspect, in a second possible implementation manner of the second aspect, the method further includes: generating, by the server, a first user identifier according to a registration message sent by the first device, where the registration message includes user identity information and at least one communication number of a user; and sending, by the server, the first user identifier to the first device.

With reference to the second possible implementation manner of the second aspect, in a third possible implementation manner of the second aspect, the registration message further includes validity period information, and the server sets a validity period for the first user identifier according to the validity period information; or the server receives validity period information sent by the first device, after the server sends the first user identifier to the first device, and the server sets a validity period for the first user identifier according to the validity period information.

With reference to the second aspect or the first possible implementation manner of the second aspect or the second possible implementation manner of the second aspect or the third possible implementation manner of the second aspect, in a fourth possible implementation manner of the second aspect, the validity period information includes one-time validity, time-span-based validity, or long-term validity.

With reference to the fourth possible implementation manner of the second aspect or the second possible implementation manner of the second aspect or the third possible implementation manner of the second aspect, in a fifth possible implementation manner of the second aspect, the generating, by the server, a session menu according to the queried at least one communication capability of the user corresponding to the second user identifier specifically includes: generating, by the server, the session menu according to the queried at least one communication capability possessed by both the user corresponding to the second user identifier and the user corresponding to the first user identifier.

According to a third aspect, a device is provided, and the device includes a query message sending unit, a session menu receiving unit, a communication establishment message sending unit, and a communication establishment unit, where: the query message sending unit is configured to send a query message to a server according to a second user identifier, where the query message is used by the server to query validity period information of the second user identifier and at least one communication capability of a user corresponding to the second user identifier; the session menu receiving unit is configured to receive a session menu sent by the server according to the query message, where the session menu is used to present the at least one communication capability of the user corresponding to the second user identifier; the communication establishment message sending unit is configured to send a communication establishment message to the server according to the session menu, where the communication establishment message includes the selected at least one communication capability; and the communication establishment unit is configured to establish, by means of communication established by the server according to the communication establishment message, communication with the user corresponding to the second user identifier, or configured to establish, according to the selected at least one communication capability, communication with the user corresponding to the second user identifier.

In a first possible implementation manner of the third aspect, the device further includes a registration message sending unit, configured to send a registration message to the server, where the registration message includes user identity information and at least one communication number of a user; and a user identifier receiving unit, configured to receive a first user identifier generated by the server according to the registration message.

With reference to the first possible implementation manner of the third aspect, in a second possible implementation manner of the third aspect, the registration message sending unit is further configured to send the validity period information; or the device further includes a validity period sending unit, configured to: after the user identifier receiving unit receives the first user identifier, send the validity period information to the server, where the validity period information is used by the server to set a validity period for the first user identifier.

With reference to the first possible implementation manner of the third aspect or the second possible implementation manner of the third aspect, in a third possible implementation manner of the third aspect, the session menu is used to present at least one communication capability possessed by both the user corresponding to the first user identifier and the user corresponding to the second user identifier.

According to a fourth aspect, a server is provided, and the server includes a query unit, a session menu generation unit, a session menu sending unit, and a communication establishment unit, where: the query unit is configured to query, according to a received query message sent by a first device according to a second user identifier, validity period information of the second user identifier and at least one communication capability of a user corresponding to the second user identifier, where the validity period information is used to determine whether the second user identifier falls within a validity period; the session menu generation unit is configured to: if the second user identifier falls within the validity period, generate a session menu according to the queried at least one communication capability of the user corresponding to the second user identifier, where the session menu is used to present the at least one communication capability of the user corresponding to the second user identifier; the session menu sending unit is configured to send the session menu to the first device; and the communication establishment unit is configured to establish, according to a received communication establishment message sent by the first device according to the session menu, communication between the first device and the user corresponding to the second user identifier, where the communication establishment message includes the at least one communication capability selected by the first device.

In a first possible implementation manner of the fourth aspect, the server further includes a reminder message sending unit, configured to: if the second user identifier falls beyond the validity period, send a reminder message to the first device, where the reminder message is used to remind the first device that the second user identifier falls beyond the validity period; and/or a request message sending unit, configured to: if the second user identifier falls beyond the validity period, send a request message to the user corresponding to the second user identifier, where the request message is used to request the user corresponding to the second user identifier to allow the server to establish communication between the first device and the user corresponding to the second user identifier.

With reference to the fourth aspect or the first possible implementation manner of the fourth aspect, in a second possible implementation manner of the fourth aspect, the server further includes a user identifier generation unit and a user identifier sending unit, where: the user identifier generation unit is configured to generate a first user identifier according to a registration message sent by the first device, where the registration message includes user identity information and at least one communication number of a user; and the user identifier sending unit is configured to send the first user identifier to the first device.

With reference to the second possible implementation manner of the fourth aspect, in a third possible implementation manner of the fourth aspect, the server further includes validity period information generation unit, configured to set a validity period for the first user identifier according to validity period information sent by the first device.

With reference to the fourth aspect or the first possible implementation manner of the fourth aspect or the second possible implementation manner of the fourth aspect or the third possible implementation manner of the fourth aspect, in a fourth possible implementation manner of the fourth aspect, the session menu generation unit is specifically configured to generate the session menu according to the queried at least one communication capability possessed by both the user corresponding to the second user identifier and the user corresponding to the first user identifier. According to a fifth aspect, a communication establishment system is provided, and the system includes the device described in the third aspect and the server described in the fourth aspect.

In the embodiments of the present invention, by using a method in which users complete communication establishment by using user identifiers, the users can smoothly establish communication without leaking personal information, which protects the personal information of the users, enhances user experience, and further eliminates fear and aversion of the users to technologies.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a communication establishment method according to an embodiment of the present invention;
FIG. 2 is a schematic diagram for displaying a session menu;
FIG. 3 is a flowchart of another communication establishment method according to an embodiment of the present invention;
FIG. 4 is a method flowchart of a registration process of a user according to an embodiment of the present invention;
FIG. 5 is a schematic flowchart of a method for establishing communication between a first user and a second user according to an embodiment of the present invention;
FIG. 6 is a schematic flowchart of another method for establishing communication between a first user and a second user according to an embodiment of the present invention;
FIG. 7 is a schematic structural diagram of a device according to an embodiment of the present invention;
FIG. 8 is a schematic structural diagram of a server according to an embodiment of the present invention; and
FIG. 9 is a schematic structural diagram of a communication establishment system according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and/or their combinations not excluded.

It should be understood that although terms "first" and "second" are used in the embodiment of the present invention to describe various types of devices or user identifiers, these devices or user identifiers are not limited by these terms. These terms are merely used to distinguish between devices or user identifiers. For example, without departing from the scope of the embodiments of the present invention, a first device or user identifier may be referred to as a second device or user identifier, and similarly, a second device or user identifier may be referred to as a first device or user identifier. It should also be understood that each of the first device and the second device may refer to one device or may generally refer to multiple devices possessed by a user.

In the embodiments of the present invention, the device includes but is not limited to mobile communications devices such as a mobile phone, a personal digital assistant (Personal Digital Assistant, PDA), a tablet computer, and a portable device (such as a portable computer), and also includes non-mobile communications devices such as an automatic teller machine (Automatic Teller Machine, ATM), which are not limited in the embodiments of the present invention.

A user identifier is used to identify related information of a user and may be equivalent to an alternative representation of the related information of the user. A common user cannot directly acquire, according to a user identifier, related information of a user corresponding to the user identifier, and can establish, only with the help of a person or a third-party device such as a device (it can be an application program on the device) or a server, communication with the user corresponding to the user identifier. This type of communication is established by the application program on the device or the server according to the related information that is of the user and used when the user identifier is registered. In a whole process, the user cannot directly obtain the related information of the user corresponding to the user identifier, that is, the related information of the user corresponding to the user identifier is unavailable to the user. The related information may include but is not limited to user identity information (which is used to identify the user corresponding to the user identifier, where the user identity information may be a name, a nickname, a code, or the like of the user, which is not limited in the present invention), at least one communication number of the user (the communication number may be understood as contact information of the user, which may be, for example, a QQ number, a WeChat number, a Facebook account, a WeChat account, a mobile number, a fixed-line number, or an email address of the user, which is not limited in the embodiments of the present invention), and validity period information (the validity period information is used to identify a time span within which or a case in which the user identifier is valid, and the following description may specifically describe the validity period information with reference to a specific possible application scenario). It should be understood that the related information of the user corresponding to the user identifier may include more content or less content, which is not limited in the embodiments of the present invention, either.

In the embodiments of the present invention, the device or the server may acquire, according to the communication number, a communication capability of the user corresponding to the user identifier. For example, if the communication number includes a mobile number of the user, the user corresponding to the user identifier possesses a communication capability of a call and/or a communication capability of an SMS message. If the communication number includes an email address of the user, the user corresponding to the user identifier possesses a capability of receiving and sending an email.

In the embodiments of the present invention, the user identifier may be an image identifier, an audio identifier, a radio frequency identifier, an electromagnetic identifier, or a digital identifier. For example, when being an image identifier, the user identifier may be a QR code, a bar code, or the like; when being a digital identifier, the user identifier may be a serial number, a license plate number, or the like. It should be understood that any representation form that can identify related information of a user should fall within the protection scope of the embodiments of the present invention.

In the embodiments of the present invention, a sequence for implementing steps may be arranged flexibly according to an actual requirement, which is not limited in the embodiments of the present invention. Each of the embodiments of the present invention merely describes one possible implementation manner as an example. A person skilled in the art may understand that although methods described in the embodiments of the present invention include multiple operations that need to be executed in specific sequences, these methods may include more operations or fewer operations, these operations may be executed in sequence or executed in parallel, and these sequences are not strict sequences.

### Embodiment 1

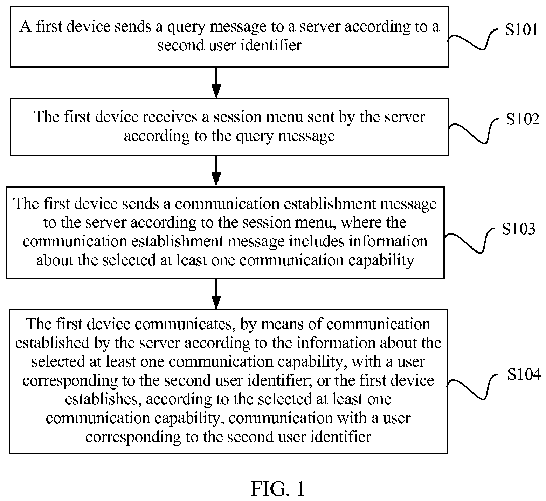

FIG. 1 is a flowchart of a communication establishment method according to an embodiment of the present invention.

As shown in FIG. 1, the communication establishment method may include the following steps: S101. A first device sends a query message to a server according to a second user identifier, where the query message is used by the server to query at least one communication capability of a user corresponding to the second user identifier.

When a first user of the first device expects to establish communication with a second user, the user of the first device uses the first device to send the query message to the server according to the second user identifier. The query message may be received and processed by the server.

Optionally, by means of processing by the server, validity period information of the second user identifier may be acquired, that is, it may be acquired whether the second user identifier falls within a validity period. If the second user identifier falls within the validity period, the at least one communication capability of the user corresponding to the second user identifier may be further acquired. Optionally, the server may send the queried validity period information to the first device.

Optionally, before that a first device sends a query message to a server according to a second user identifier, the method further includes: acquiring, by the first device, the second user identifier.

When expecting to establish communication with the second user, the user of the first device further needs to acquire the second user identifier of the second user at first. The method for acquiring the second user identifier may vary accordingly according to a characteristic of the second user identifier. For example, if the second user identifier is a QR code or a bar code, the second user identifier may be acquired by scanning. The method for acquiring the second user identifier is not limited in this embodiment of the present invention.

S102. The first device receives a session menu sent by the server according to the query message, where the session menu is used to present the at least one communication capability of the user corresponding to the second user identifier.

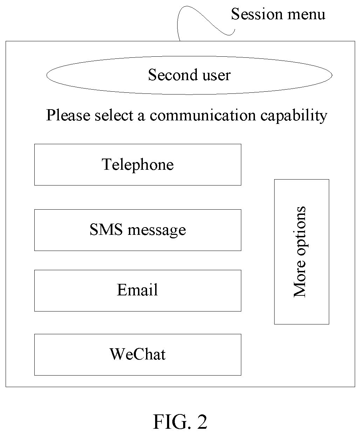

After the first device sends the query message to the server, the second device receives the session menu sent by the server according to the query message, where the session menu is used to present the at least one communication capability of the user corresponding to the second user identifier, that is, notify the first user of the first device of a manner in which communication may be established with the second user. For example, the manner may be establishing telephone communication or establishing SMS message communication or establishing email communication, which is not limited in this embodiment of the present invention. In addition, the session menu may present any quantity of communication capabilities according to setting by a system or the user. The session menu may be shown in FIG. 2. FIG. 2 is a schematic diagram for displaying a session menu. It should be understood that FIG. 2 is merely one possible display manner of the session menu. The session menu may be displayed in more manners, or may have more content or less content, which is not limited in this embodiment of the present invention. Optionally, when a message sent by the server to the first device includes the validity period information, if the second user identifier falls within the validity period, the session menu is displayed. That is, the first device determines, according to the received validity period information, whether the second user identifier falls within the validity period, and if the second user identifier falls within the validity period, the session menu is displayed, or if the second user identifier falls beyond the validity period, the session menu is not displayed.

S103. The first device sends a communication establishment message to the server according to the session menu, where the communication establishment message includes information about the selected at least one communication capability.

After the first device receives the session menu, the first user of the first device sends the communication establishment message to the server according to the session menu and a status of the first user by using the first device, where the communication establishment message may include information about one or more communication capabilities selected by the first user. If the communication establishment message includes information about multiple communication capabilities, the server may select, according to a priority that is set by the user or a preset priority, one communication capability to establish communication, or may establish multiple types of communication at the same time, which is not limited in this embodiment of the present invention.

S104. The first device communicates, by means of communication established by the server according to the information about the selected at least one communication capability, with the user corresponding to the second user identifier; or the first device establishes, according to the selected at least one communication capability, communication with the user corresponding to the second user identifier.

After the communication establishment message is sent to the server, the first device may wait for the server to establish communication between the first device and the second user, and after the communication is established, the first device may communicate with the second user.

Alternatively, the first device may establish communication between the first device and the second user according to the selected communication capability. It may be understood that actually, establishing communication with the second user is technically establishing communication between the first device of the first user and the device of the second user, that is, the users communicate by using the devices. The device of the second user that communicates may be any device that is of the second user and that possesses the selected communication capability, and specifically selecting which device may be set by the user or a device, which is not limited in this embodiment of the present invention. It should also be understood that if the first user, the user of the first device, registers with the server previously, instead of establishing communication only for the first device, the server may establish communication for any device that is of the first user and that possesses the selected communication capability.

It may be learned according to the foregoing method that in a whole process of establishing communication, each of users does not know a communication number of the other, and the users implement communication establishment by using user identifiers, so that the users can smoothly establish communication without leaking personal information, which protects the personal information of the users, enhances user experience, and further eliminates fear and aversion of the users to technologies.

Optionally, before step S101 to step S104, the method further includes steps S1001 and S1002. S1001. The first device sends a registration message to the server, where the registration message includes user identity information and at least one communication number of a user.

The first device may send the registration message to the server in advance to complete a registration process.

Optionally, the registration message in step S1001 further includes validity period information, and the validity period information is used by the server to set a validity period for a first user identifier.

S1002. The first device receives a first user identifier generated by the server according to the registration message.

Optionally, after step S1002, the method may further include a step S1003. The first device sends validity period information to the server, where the validity period information is used by the server to set a validity period for the first user identifier.

Optionally, the validity period information in step S1001 or step S1003 includes one-time validity, time-span-based validity, or long-term validity.

The one-time validity means that the user identifier can be used only once. After the user identifier is used once, the user identifier becomes invalid, and another user cannot further establish, according to the user identifier, communication with the user corresponding to the user identifier. The time-span-based validity means that the user may set a given period for the user identifier of the user. Within this time period, the user identifier is valid, and beyond this time period, another user cannot further establish, according to the user identifier, communication with the user corresponding to the user identifier. The long-term validity means that the user does not set a validity period for the user identifier of the user, and another user may establish, by using the user identifier, communication with the user corresponding to the user identifier.

Optionally, after step S1001 or step S1002 is executed, the session menu in steps S102 and S103 is used to present at least one communication capability possessed by both the user corresponding to the first user identifier and the user corresponding to the second user identifier.

It may be learned according to the foregoing method that in a whole process of establishing communication, each of users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user, so that the user can periodically change the user identifier to further protect personal information of the user, and convenience of using the user identifier is further improved.

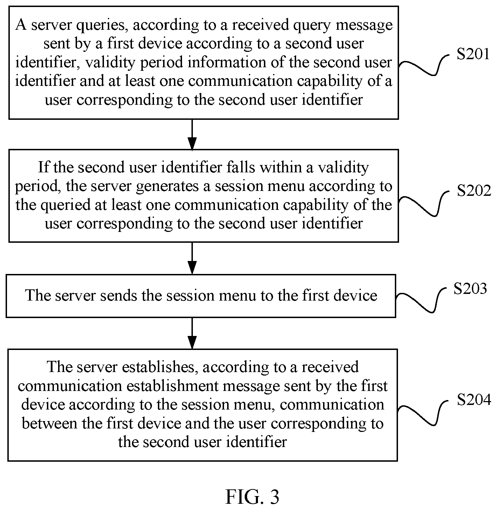

FIG. 3 is a flowchart of another communication establishment method according to an embodiment of the present invention.

As shown in FIG. 3, the communication establishment method may include the following steps:
S201. A server queries, according to a received query message sent by a first device according to a second user identifier, validity period information of the second user identifier and at least one communication capability of a user corresponding to the second user identifier, where the validity period information is used to determine whether the second user identifier falls within a validity period.

According to the received query message, the server queries whether the second user identifier falls within the validity period, and at the same time, may query the at least one communication capability of the user corresponding to the second user identifier; or certainly, the server may first query, according to the received query message, whether the second user identifier falls within the validity period, and if the second user identifier falls within the validity period, the server queries, according to the second user identifier, the at least one communication capability of the user corresponding to the user identifier, which is not limited in this embodiment of the present invention. The at least one communication capability may be a communication capability possessed by the user corresponding to the second user identifier, or may be a communication capability possessed by the user corresponding to the second user identifier and a communication capability possessed by a user of the first device.

S202. If the second user identifier falls within the validity period, the server generates a session menu according to the queried at least one communication capability of the user corresponding to the second user identifier, where the session menu is used to present the at least one communication capability of the user corresponding to the second user identifier.

If a query result is that the second user identifier falls within the validity period, the server generates the session menu. As shown in FIG. 2, FIG. 2 is a schematic diagram for displaying one possible presentation manner of a session menu.

Optionally, if the second user identifier falls beyond the validity period, the server sends a reminder message to the first device, where the reminder message is used to remind the first device that the second user identifier falls beyond the validity period. The server may send the reminder message to the first device according to the query result, where the reminder message is used to notify the first device that the second user identifier expires and the server cannot establish communication between the first device and the user corresponding to the second user identifier. The foregoing method can help the user of the first device learn of an establishment status of the communication in a timely manner and make a corresponding action in a timely manner, which improves user experience.

Optionally, if the second user identifier falls beyond the validity period, the server sends a request message to the user corresponding to the second user identifier, where the request message is used to request the user corresponding to the second user identifier to allow the server to establish communication between the first device and the user corresponding to the second user identifier. If the server discovers that the second user identifier falls beyond the validity period, the server sends a request message to the second user, where the request message may be used to request the user corresponding to the second user identifier to choose whether the second user identifier remains valid. The request message may include some information of a requester (the first device), the user corresponding to the second user identifier determines, according to the information, whether to be willing to communicate with the requester, and if the user corresponding to the second user identifier is willing to communicate with the requester, the second user identifier remains valid.

S203. The server sends the session menu to the first device.

The server sends the generated session menu to the first device.

S204. The server establishes, according to a received communication establishment message sent by the first device according to the session menu, communication between the first device and the user corresponding to the second user identifier, where the communication establishment message includes the at least one communication capability selected by the first device.

It should also be understood that if the first user, the user of the first device, registers with the server previously, instead of establishing communication only for the first device, the server may establish communication for any device that is of the first user and that possesses the selected communication capability.

This embodiment of the present invention provides a communication establishment method. In a whole process of establishing communication, each of users does not know a communication number of the other, and the users implement communication establishment by using user identifiers, so that the users can smoothly establish communication without leaking personal information, which protects the personal information of the users, enhances user experience, and further eliminates fear and aversion of the users to technologies.

Optionally, before step S201 to step S204, the method further includes steps S2001 and S2002. S2001. The server generates a first user identifier according to a registration message sent by the first device, where the registration message includes user identity information and at least one communication number of a user.

Optionally, the registration message in step S2001 further includes validity period information, and the validity period information is used by the server to set a validity period for the first user identifier.

S2002. The server sends the first user identifier to the first device.

Optionally, after step S2002, the method may further include a step S2003. The server receives validity period information sent by the first device, and the server sets a validity period for the first user identifier according to the validity period information.

Optionally, the validity period information in step S2001 or step S2003 includes one-time validity, time-span-based validity, or long-term validity.

Optionally, after step S2001 or step S2002 is executed, the session menu generated by the server is used to present at least one communication capability possessed by both the user corresponding to the first user identifier and the user corresponding to the second user identifier. This embodiment of the present invention provides a communication establishment method. In a whole process of establishing communication, each of users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user, so that the user can periodically change the user identifier to further protect personal information of the user, and convenience of using the user identifier is further improved.

Optionally, the following describes an embodiment of the present invention by using a method for establishing communication between a first user and a second user as an example. In this embodiment of the present invention, the first user wants to establish communication with the second user; however, the first user does not know a specific communication number of the second user, and can acquire only a second user identifier of the second user, where the second user identifier is generated by a server with which the second user registers in advance. The following first describes a registration process of the second user, and then describes how the first user and the second user establish communication in this case.

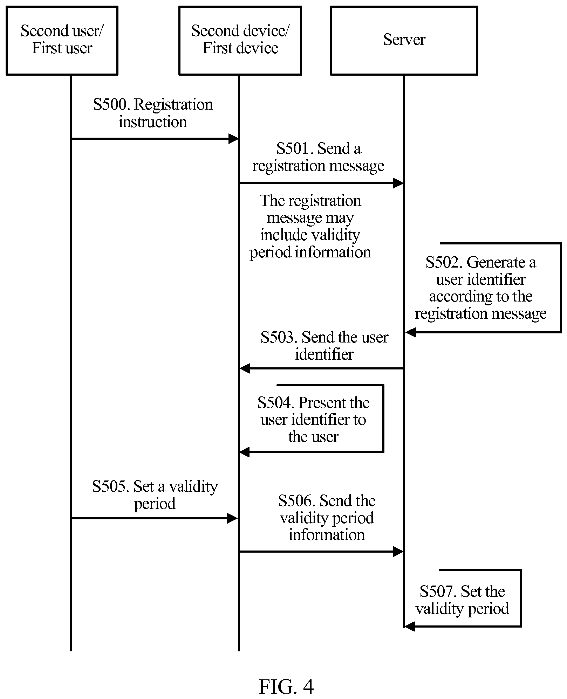

FIG. 4 is a method flowchart of a registration process of a user according to an embodiment of the present invention. As shown in FIG. 4, a registration process of a second user includes:
S500. The second user sends a registration instruction to a second device, where the registration instruction is used to instruct the second device to send a registration message to a server.
S501. The second device sends the registration message to the server, where the registration message includes user identity information and at least one communication number of the user. For example, the user identifier information may be the second user and the communication number may be a mobile number 186XXXXX140. Optionally, in this step, the registration message may include validity period information.
S502. The server generates a second user identifier according to the registration message. Optionally, the server may further establish an association relationship between the second user identifier and each of the user identifier information and the communication number of the user. Further optionally, if the registration message includes the validity period information, the server may further set a validity period for the second user identifier, where the validity period may be that the second user identifier is permanently valid or may be valid within a time period or may be valid at a moment or may be valid once, which is not limited in this embodiment of the present invention.
S503. The server sends the user identifier to the second device.
S504. The second device presents the received second user identifier to the second user. A presentation method may be displaying the second user identifier, or may be presenting the second user identifier to the user in another manner in which the user may be aware of the second user identifier, which is not limited in this embodiment of the present invention. Optionally, after step S504, the second user may use the second user identifier. For example, the second user may send the second user identifier to a first user, so that the first user contacts the second user; or may present the second user identifier on an object, so that a first user can acquire the second user identifier. Specifically, for example, the second user identifier is a QR code. The second user may print the QR code and stick the QR code to a car of the second user. In this case, if the first user wants to contact the second user, the first user may establish, by scanning the QR code, communication with the second user by means of the server. In this process, the second user does not need to disclose a real telephone number of the second user to the first user, which can avoid a risk of information leakage. It should be understood that the foregoing is merely an example of a method for using a user identifier, and this embodiment of the present invention does not impose a limitation on the method for using a user identifier. In addition, it should be understood that the first user may be a user who registers with the server or may be a user who does not register with the server.

Optionally, if the registration message in step S501 does not include the validity period information, the registration process may further include the following steps: S505. The second user sends an instruction for setting a validity period to the second device. S506. The second device sends the validity period information to the server. S507. The server sets the validity period according to the validity period information. It should be understood that after the validity period is set, the validity period can be modified according to a requirement of the user. According to the foregoing registration method, in a subsequent whole process of establishing communication between users, each of the users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user, so that the user can periodically change the user identifier to further protect personal information of the user, and convenience of using the user identifier is further improved.

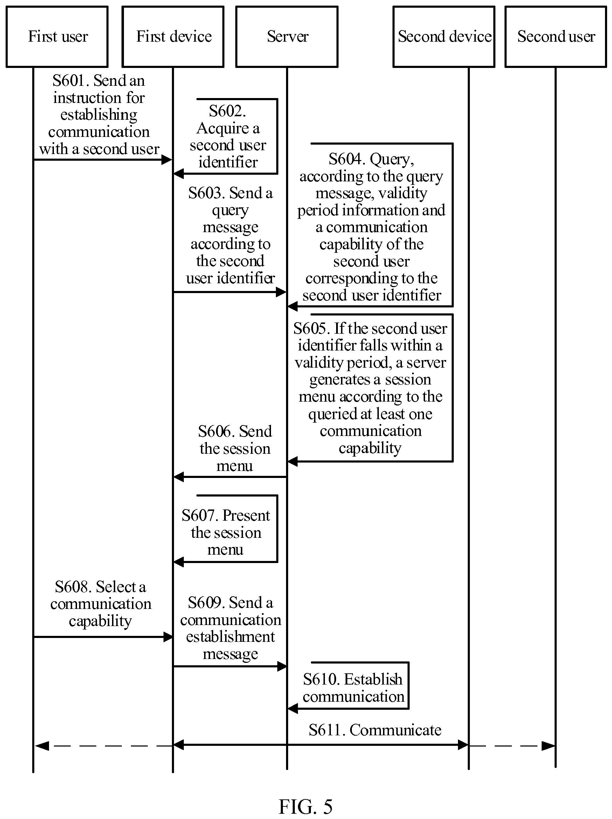

FIG. 5 is a schematic flowchart of a method for establishing communication between a first user and a second user according to an embodiment of the present invention. The second user completes registration by using a server and receives a second user identifier. The first user may be a user who completes registration by using the server, or may be a user who does not complete registration. As shown in FIG. 5, the method includes:
S601. The first user sends an instruction for establishing communication with the second user to a first device.
S602. The first device acquires the second user identifier corresponding to the second user. S603. The first device sends a query message to the server according to the second user identifier.
S604. The server queries, according to the received query message, validity period information of the second user identifier and at least one communication capability of the second user corresponding to the second user identifier.
S605. If the second user identifier falls within a validity period, the server generates a session menu according to the queried at least one communication capability of the second user corresponding to the second user identifier.

Optionally, if the first user also registers with the server, and a registration process is shown in FIG. 4, step S605 specifically includes: generating, by the server, the session menu according to the queried at least one communication capability possessed by both the user corresponding to the second user identifier and the user corresponding to a first user identifier.

Optionally, if the second user identifier falls beyond the validity period, the server sends a reminder message to the first device, where the reminder message is used to remind that the second user identifier expires and the server cannot establish communication between the first device and the second user corresponding to the second user identifier.

Optionally, when the session menu is being generated, a communication capability of the server may be further considered. The session menu is generated after communication capabilities of all parties are comprehensively considered.

S606. The server sends the session menu to the first device.

S607. The first device presents the session menu to the first user.

S608. The first device receives a communication capability selected by the first user.

S609. The first device sends a communication establishment message to the server according to the communication capability selected by the first user, where the communication establishment message includes the communication capability selected by the first user.

S610. The server establishes communication between the first device and the second user according to the communication establishment message.

For example, the server establishes communication for both parties according to a communication capability that is selected by a user and in a communication establishment message, which may be that the server organizes a session meeting and invites the both parties to participate, or generates a message (a voice message) to forward or push the message to a corresponding user. It should be understood that in the communication established by the server between the first device and the second user, the second user may establish communication with first device by using the second device used when the second user performs registration, or may establish communication with the first device by using any other device that possesses the selected communication capability, which is not limited in this embodiment of the present invention.

S611. The first user and the second user communicate by using the devices of the first user and the second user.

In this embodiment of the present invention, communication between a first user and a second user is established by using the foregoing communication method. In a whole process, each of the first user and the second user does not know a communication number of the other, which fully protects privacy of the both parties.

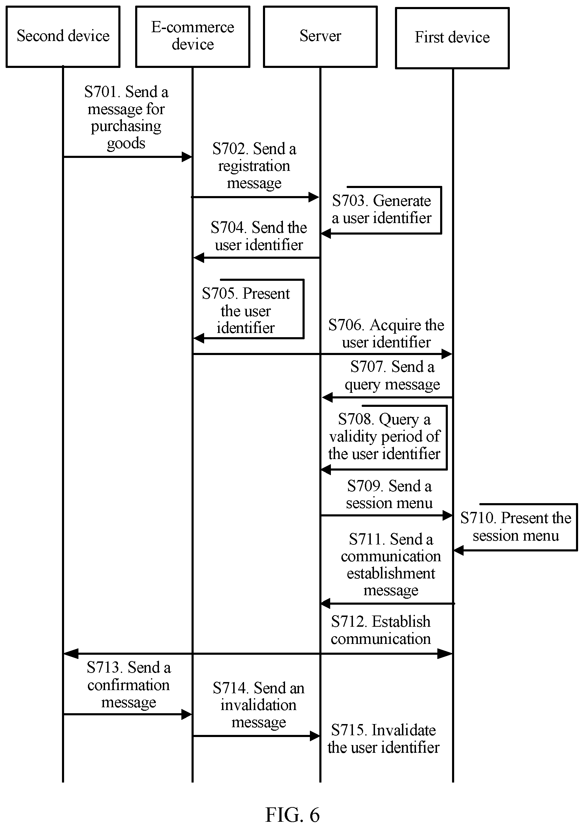

FIG. 6 is a schematic flowchart of another method for establishing communication between a first user and a second user according to an embodiment of the present invention. In this embodiment of the present invention, the second user of a second device wants to purchase goods by means of e-commerce (such as JD.com, Huawei Vmall, or Amazon), and in a delivery process, expects that the first user (a courier) can contact himself (the second user), but does not expect that the courier knows a communication number of the second user. According to the communication establishment method provided in this embodiment of the present invention, a technical problem that a communication number of a user is protected from being known by another person can be resolved. The method includes the following steps.

S701. The second device sends a message for purchasing goods to an e-commerce device. The second user sends the message to the e-commerce device by using the second device.

S702. The e-commerce device sends a registration message to a server according to related information of the second user.

S703. The server generates, according to the registration message, a second user identifier corresponding to the second user. Optionally, the server may set a validity period for the second user identifier according to the registration message. In this embodiment of the present invention, the validity period may be one-time validity, that is, after the server establishes communication for the second user according to the second user identifier, the second user identifier becomes invalid.

S704. The server sends the second user identifier to the e-commerce device.

S705. The e-commerce device presents the second user identifier. In this embodiment of the present invention, the e-commerce device may print the received second user identifier on a consignment note.

S706. A first device acquires the second user identifier.

S707. The first device sends a query message to the server according to the second user identifier.

S708. The server queries whether the second user identifier falls within a validity period.

S709. If the second user identifier falls within the validity period, send a session menu to the first device.

S710. The first device presents the session menu.

S711. The first device sends a communication establishment message to the server according to a selection of the first user, where the message includes a communication capability selected by the first user.

S712. The server establishes communication between the first device and the second user. For example, the server establishes communication between a courier and the second user, so that the courier completes a delivery process.

S713. The second device sends a confirmation message to the e-commerce device. For example, after receiving the goods, the second user sends the confirmation message to the e-commerce device. It should be understood that the confirmation message may be sent by the courier to the e-commerce, which is not limited in this embodiment of the present invention.

S714. The e-commerce device sends an invalidation message to the server. It should be understood that in this embodiment of the present invention, the invalidation message may be directly sent by the second user or the courier to the server.

S715. The server performs invalidation processing on the second user identifier according to the invalidation message.

This embodiment of the present invention provides a communication establishment method. In a whole process of establishing communication, each of users does not know a communication number of the other, and after the user picks up and signs, a user identifier of the user is deregistered. The method protects personal information of the users, enhances user experience, and further eliminates fear and aversion of the users to technologies.

### Embodiment 2

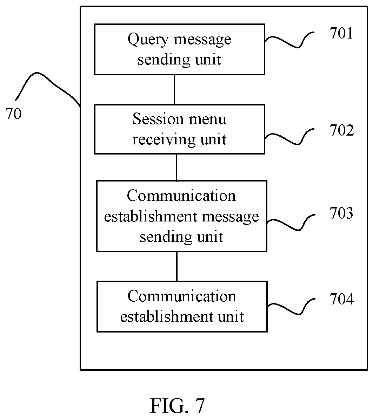

FIG. 7 is a schematic structural diagram of a device according to an embodiment of the present invention. As shown in FIG. 7, a device 70 may include a query message sending unit 701, a session menu receiving unit 702, a communication establishment message sending unit 703, and a communication establishment unit 704. The query message sending unit 701 is configured to send a query message to a server according to a second user identifier, where the query message is used by the server to query validity period information of the second user identifier and at least one communication capability of a user corresponding to the second user identifier. The session menu receiving unit 702 is configured to receive a session menu sent by the server according to the query message, where the session menu is used to present the at least one communication capability of the user corresponding to the second user identifier. The communication establishment message sending unit 703 is configured to send a communication establishment message to the server according to the session menu, where the communication establishment message includes the selected at least one communication capability. The communication establishment unit 704 is configured to establish, by means of communication established by the server according to the communication establishment message, communication with the user corresponding to the second user identifier, or configured to establish, according to the selected at least one communication capability, communication with the user corresponding to the second user identifier.

The query message sending unit 701, the session menu receiving unit 702, the communication establishment message sending unit 703, and the communication establishment unit 704 are specifically respectively used to execute the method in steps S101, S102, S103, and S104 in Embodiment 1 of the present invention. For details of the specific method, refer to Embodiment 1 of the present invention, and details are not described herein again.

This embodiment of the present invention provides a device 70. By using the device 70, in a whole process of establishing communication, each of users does not know a communication number of the other, and the users implement communication establishment by using user identifiers, so that the users can smoothly establish communication without leaking personal information, which protects the personal information of the users, enhances user experience, and further eliminates fear and aversion of the users to technologies.

Optionally, the device 70 further includes a registration message sending unit 705, configured to send a registration message to the server, where the registration message includes user identity information and at least one communication number of a user; and a user identifier receiving unit 706, configured to receive a first user identifier generated by the server according to the registration message. The registration message sending unit 705 and the user identifier receiving unit 706 are used to execute the method in steps S1001 and S1002 in Embodiment 1 of the present invention. For details of the specific method, refer to Embodiment 1 of the present invention, and details are not described herein again.

Optionally, the registration message sending unit 705 is further configured to send validity period information; or the device 70 further includes a validity period sending unit 707, configured to: after the user identifier receiving unit receives the first user identifier, send the validity period information to the server, where the validity period information is used by the server to set a validity period for the first user identifier. The validity period sending unit 707 is used to execute the method in step S1003 in Embodiment 1 of the present invention. For details of the specific method, refer to Embodiment 1 of the present invention, and details are not described herein again.

Optionally, the session menu is used to present at least one communication capability possessed by both the user corresponding to the first user identifier and the user corresponding to the second user identifier.

A user may further flexibly set a validity period for a user identifier of the user by using the device 70, so that the user can periodically change the user identifier to further protect personal information of the user, and convenience of using the user identifier is further improved.

This embodiment of the present invention provides a device. By using the device 70, in a whole process of establishing communication, each of users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user by using the device 70, so that the user can periodically change the user identifier to further protect personal information of the user, and convenience of using the user identifier is further improved.

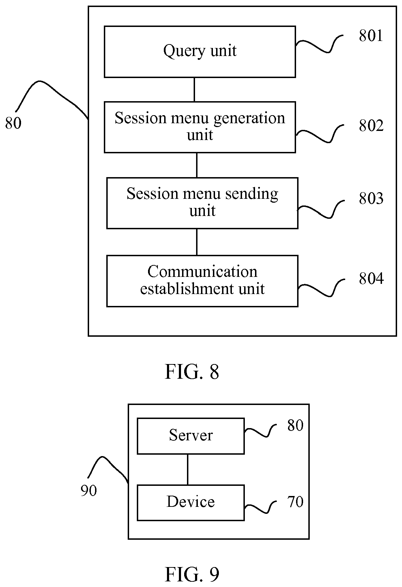

FIG. 8 is a schematic structural diagram of a server according to an embodiment of the present invention. As shown in FIG. 8, a server 80 includes a query unit 801, a session menu generation unit 802, a session menu sending unit 803, and a communication establishment unit 804. The query unit 801 is configured to query, according to a received query message sent by a first device according to a second user identifier, validity period information of the second user identifier and at least one communication capability of a user corresponding to the second user identifier, where the validity period information is used to determine whether the second user identifier falls within a validity period. The session menu generation unit 802 is configured to: if the second user identifier falls within the validity period, generate a session menu according to the queried at least one communication capability of the user corresponding to the second user identifier, where the session menu is used to present the at least one communication capability of the user corresponding to the second user identifier. The session menu sending unit 803 is configured to send the session menu to the first device. The communication establishment unit 804 is configured to establish, according to a received communication establishment message sent by the first device according to the session menu, communication between the first device and the user corresponding to the second user identifier, where the communication establishment message includes the at least one communication capability selected by the first device.

The query unit 801, the session menu generation unit 802, the session menu sending unit 803, and the communication establishment unit 804 are specifically respectively used to execute the method in steps S201, S202, S203, and S204 in Embodiment 1 of the present invention. For details of the specific method, refer to Embodiment 1 of the present invention, and details are not described herein again.

Optionally, the server 80 further includes a reminder message sending unit 805, configured to: if the second user identifier falls beyond the validity period, send a reminder message to the first device, where the reminder message is used to remind the first device that the second user identifier falls beyond the validity period.

Optionally, the server 80 may further include a request message sending unit 806, configured to: if the second user identifier falls beyond the validity period, send a request message to the user corresponding to the second user identifier, where the request message is used to request the user corresponding to the second user identifier to allow the server 80 to establish communication between the first device and the user corresponding to the second user identifier.

This embodiment of the present invention provides a server 80. By using the server 80, in a whole process of establishing communication, each of users does not know a communication number of the other, and the users implement communication establishment by using user identifiers, so that the users can smoothly establish communication without leaking personal information, which protects the personal information of the users, enhances user experience, and further eliminates fear and aversion of the users to technologies.

Optionally, the server 80 further includes a user identifier generation unit 807 and a user identifier sending unit 808.

The user identifier generation unit 807 is configured to generate a first user identifier according to a registration message sent by the first device, where the registration message includes user identity information and at least one communication number of a user; and the user identifier sending unit 808 is configured to send the first user identifier to the first device.

The user identifier generation unit 807 and the user identifier sending unit 808 are respectively used to execute the method in steps S2001 and S2002 in Embodiment 1 of the present invention. For details of the specific method, refer to Embodiment 1 of the present invention, and details are not described herein again.

Optionally, the server 80 further includes a validity period information generation unit 809, configured to set a validity period for the first user identifier according to validity period information sent by the first device. The validity period information generation unit 809 is used to execute the method in step S2003 in Embodiment 1 of the present invention. For details of the specific method, refer to Embodiment 1 of the present invention, and details are not described herein again.

Optionally, the session menu generation unit is specifically configured to generate the session menu according to the queried at least one communication capability possessed by both the user corresponding to the second user identifier and the user corresponding to the first user identifier. This embodiment of the present invention provides a server 80. By using the server 80, in a whole process of establishing communication, each of users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user, so that the user can periodically change the user identifier to further protect personal information of the user, and convenience of using the user identifier is further improved.

FIG. 9 is a schematic structural diagram of a communication establishment system according to an embodiment of the present invention. As shown in FIG. 9, a system 90 includes a device 70 and a server 80. The system 90 may execute the method in Embodiment 1 of the present invention. For details, refer to Embodiment 1 of the present invention, and details are not described herein.

This embodiment of the present invention provides a system 90. By using the system 90, in a whole process of establishing communication, each of users does not know a communication number of the other. The users implement communication establishment by using user identifiers, which protects personal information of the users, enhances user experience, and further eliminates fear and aversion of the users to technologies. In addition, a user may further flexibly set a validity period for a user identifier of the user, so that the user can periodically change the user identifier to further protect personal information of the user, and convenience of using the user identifier is further improved.

With descriptions of the foregoing embodiments, a person skilled in the art may clearly understand that the embodiments of the present invention may be implemented by hardware, firmware or a combination thereof. When the present invention is implemented by software, the foregoing functions may be stored in a terminal-readable medium or transmitted as one or more instructions or code in the terminal-readable medium. The terminal-readable medium includes a terminal storage medium and a communications medium, where the available communications medium includes any medium that enables a terminal program to be transmitted from one place to another. The storage medium may be any available medium accessible to a terminal. The following provides an example but does not impose a limitation: The terminal-readable medium may include a RAM, a ROM, an EEPROM, a CD-ROM, or another optical disc storage or a disk storage medium, or another magnetic storage terminal device, or any other medium that can carry or store expected program code in a form of an instruction or a data structure and can be accessed by a terminal. In addition, any connection may be appropriately defined as a terminal-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the embodiments of the present invention includes a compact disc CD, a laser disc, an optical disc, a digital versatile disc (DVD), a floppy disk and a Blu-ray disc, where the available disk generally copies data by a magnetic means, and the disc copies data optically by a laser means. The foregoing combination should also be included in the protection scope of the terminal-readable medium.

In short, the foregoing descriptions are only embodiments of the technical solutions of the present invention, but are not intended to limit the protection scope of the present invention. Any modification, equivalent replacement, or improvement made without departing from the principle of the present invention shall fall within the protection scope of the present invention.

## Claims

1. A communication establishment method, wherein the method comprises:
acquiring, by a first device, a second user identifier by scanning, wherein the second user identifier is an image identifier;
sending (S101), by the first device, a query message to a server according to the second user identifier, wherein the query message is used by the server to query at least one communication capability of a user corresponding to the second user identifier, wherein related information of the user corresponding to the second user identifier is unavailable to a user of the first device;
receiving (S102), by the first device, a session menu sent by the server according to the query message, wherein the session menu is used to present the at least one communication capability of the user corresponding to the second user identifier;
sending (S103), by the first device, a communication establishment message to the server according to the session menu, wherein the communication establishment message comprises information about the selected at least one communication capability; and
communicating (S104), by the first device by means of communication established by the server according to the selected at least one communication capability, with the user corresponding to the second user identifier; or
establishing, by the first device according to the selected at least one communication capability, communication with the user corresponding to the second user identifier;
wherein in a whole process, the user of the first device cannot directly obtain the related information of the user corresponding to the second user identifier.

2. The method according to claim 1, wherein the method further comprises:
sending (S1001), by the first device, a registration message to the server, wherein the registration message comprises user identity information and at least one communication number of a user; and
receiving (S1002), by the first device, a first user identifier generated by the server according to the registration message.

3. The method according to claim 2, wherein:
the registration message further comprises validity period information; or
after the receiving, by the first device, a first user identifier generated by the server according to the registration message, the method further comprises:
sending (S1003), by the first device, validity period information to the server,; wherein
the validity period information is used by the server to set a validity period for the first user identifier.

4. The method according to claim 2 or 3, wherein the session menu is used to present at least one communication capability possessed by both the user corresponding to the first user identifier and the user corresponding to the second user identifier.

5. A communication establishment method, wherein the method comprises:
querying (S201), by a server according to a received query message sent by a first device according to a second user identifier, validity period information of the second user identifier and at least one communication capability of a user corresponding to the second user identifier, wherein the validity period information is used to determine whether the second user identifier falls within a validity period, wherein the second user identifier is acquired by the first device by scanning, and the second user identifier is an image identifier, wherein related information of the user corresponding to the second user identifier is unavailable to a user of the first device;
if the second user identifier falls within the validity period, generating (S202), by the server, a session menu according to the queried at least one communication capability of the user corresponding to the second user identifier, wherein the session menu is used to present the at least one communication capability of the user corresponding to the second user identifier;
sending (S203), by the server, the session menu to the first device; and
establishing (S204), by the server according to a received communication establishment message sent by the first device according to the session menu, communication between the first device and the user corresponding to the second user identifier, wherein the communication establishment message comprises the at least one communication capability selected by the first device;
wherein in a whole process, the user of the first device cannot directly obtain the related information of the user corresponding to the second user identifier.

6. The method according to claim 5, wherein the method further comprises:
if the second user identifier falls beyond the validity period, sending, by the server, a reminder message to the first device, wherein the reminder message is used to remind the first device that the second user identifier falls beyond the validity period; or
if the second user identifier falls beyond the validity period, sending, by the server, a request message to the user corresponding to the second user identifier, wherein the request message is used to request the user corresponding to the second user identifier to allow the server to establish communication between the first device and the user corresponding to the second user identifier.

7. The method according to claim 5 or 6, wherein the method further comprises:
generating (S2001), by the server, a first user identifier according to a registration message sent by the first device, wherein the registration message comprises user identity information and at least one communication number of a user; and
sending (S2002), by the server, the first user identifier to the first device.

8. The method according to claim 7, wherein
the registration message further comprises validity period information, and the server sets a validity period for the first user identifier according to the validity period information; or
after the sending, by the server, the first user identifier to the first device, the method further comprises:
receiving (S2003), by the server, validity period information sent by the first device, and setting, by the server, a validity period for the first user identifier according to the validity period information.

9. The method according to any one of claims 5 to 8, wherein the validity period information comprises one-time validity, time-span-based validity, or long-term validity.

10. The method according to any one of claims 7 to 9, wherein the generating, by the server, a session menu according to the queried at least one communication capability of the user corresponding to the second user identifier specifically comprises:
generating, by the server, the session menu according to the queried at least one communication capability possessed by both the user corresponding to the second user identifier and the user corresponding to the first user identifier.

11. A device (70), wherein the device (70) comprises a query message sending unit (701), a session menu receiving unit (702), a communication establishment message sending unit (703), and a communication establishment unit (704); wherein
the query message sending unit (701) is configured to acquire a second user identifier by scanning and send a query message to a server according to the second user identifier, wherein the second user identifier is an image identifier, wherein the query message is used by the server to query at least one communication capability of a user corresponding to the second user identifier, wherein related information of the user corresponding to the second user identifier is unavailable to a user of the first device;
the session menu receiving unit (702) is configured to receive a session menu sent by the server according to the query message, wherein the session menu is used to present the at least one communication capability of the user corresponding to the second user identifier;
the communication establishment message sending unit (703) is configured to send a communication establishment message to the server according to the session menu, wherein the communication establishment message comprises information about the selected at least one communication capability; and
the communication establishment unit (704) is configured to establish, by means of communication established by the server according to the communication establishment message, communication with the user corresponding to the second user identifier, or configured to establish, according to the selected at least one communication capability, communication with the user corresponding to the second user identifier;
wherein in a whole process, the user of the first device cannot directly obtain the related information of the user corresponding to the second user identifier.

12. The device according to claim 11, wherein the device further comprises:
a registration message sending unit (705), configured to send a registration message to the server, wherein the registration message comprises user identity information and at least one communication number of a user; and
a user identifier receiving unit (706), configured to receive a first user identifier generated by the server according to the registration message.

13. The device according to claim 12, wherein:
the registration message sending unit (705) is further configured to send a validity period information; or
the device (70) further comprises a validity period sending unit, configured to: after the user identifier receiving unit receives the first user identifier, send a validity period information to the server; wherein
the validity period information is used by the server to set a validity period for the first user identifier;
the query message sending unit (701) is further configured to send a query message to the server according to a second user identifier to query validity period information of the second user identifier.

14. A server (80), wherein the server comprises a query unit (801), a session menu generation unit (802), a session menu sending unit (803), and a communication establishment unit (804); wherein
the query unit (801) is configured to query, according to a received query message sent by a first device according to a second user identifier, validity period information of the second user identifier and at least one communication capability of a user corresponding to the second user identifier, wherein the validity period information is used to determine whether the second user identifier falls within a validity period, wherein the second user identifier is acquired by the first device by scanning, and the second user identifier is an image identifier, wherein related information of the user corresponding to the second user identifier is unavailable to a user of the first device;
the session menu generation unit (802) is configured to: if the second user identifier falls within the validity period, generate a session menu according to the queried at least one communication capability of the user corresponding to the second user identifier, wherein the session menu is used to present the at least one communication capability of the user corresponding to the second user identifier;
the session menu sending unit (803) is configured to send the session menu to the first device; and
the communication establishment unit (804) is configured to establish, according to a received communication establishment message sent by the first device according to the session menu, communication between the first device and the user corresponding to the second user identifier, wherein the communication establishment message comprises the at least one communication capability selected by the first device;
wherein in a whole process, the user of the first device cannot directly obtain the related information of the user corresponding to the second user identifier.

15. The server according to claim 14, wherein the server further comprises:
a reminder message sending unit (805), configured to: if the second user identifier falls beyond the validity period, send a reminder message to the first device, wherein the reminder message is used to remind the first device that the second user identifier falls beyond the validity period; and/or
a request message sending unit (806), configured to: if the second user identifier falls beyond the validity period, send a request message to the user corresponding to the second user identifier, wherein the request message is used to request the user corresponding to the second user identifier to allow the server to establish communication between the first device and the user corresponding to the second user identifier.

## Patentansprüche

1. Kommunikationseinrichtungsverfahren, wobei das Verfahren Folgendes umfasst:
Erfassen einer zweiten Benutzerkennung mittels Abtasten durch eine erste Vorrichtung, wobei die zweite Benutzerkennung eine Bildkennung ist;
Senden (S101) gemäß der zweiten Benutzerkennung einer Abfragenachricht durch die erste Vorrichtung an einen Server, wobei die Abfragenachricht vom Server verwendet wird, um mindestens eine Kommunikationsfähigkeit eines Benutzers, der der zweiten Benutzerkennung entspricht, abzufragen, wobei zugehörige Informationen des Benutzers, der der zweiten Benutzerkennung entspricht, für einen Benutzer der ersten Vorrichtung nicht verfügbar sind;
Empfangen (S102) eines Sitzungsmenüs, das vom Server gemäß der Abfragenachricht gesendet wurde, durch die erste Vorrichtung, wobei das Sitzungsmenü verwendet wird, um die mindestens eine Kommunikationsfähigkeit des Benutzers, der der zweiten Benutzerkennung entspricht, zu präsentieren;
Senden (S103) einer Kommunikationseinrichtungsnachricht gemäß dem Sitzungsmenü durch die erste Vorrichtung an den Server, wobei die Kommunikationseinrichtungsnachricht Informationen zur ausgewählten mindestens einen Kommunikationsfähigkeit umfasst; und
Kommunizieren (S104) mittels einer Kommunikation, die vom Server gemäß der ausgewählten mindestens einen Kommunikationsfähigkeit eingerichtet wurde, der ersten Vorrichtung mit dem Benutzer, der der zweiten Benutzerkennung entspricht; oder
Einrichten durch die erste Vorrichtung gemäß der ausgewählten mindestens einen Kommunikationsfähigkeit einer Kommunikation mit dem Benutzer, der der zweiten Benutzerkennung entspricht;
wobei in einem gesamten Prozess der Benutzer der ersten Vorrichtung die zugehörigen Informationen des Benutzers, der der zweiten Benutzerkennung entspricht, nicht direkt erhalten kann.

2. Verfahren nach Anspruch 1, wobei das Verfahren ferner Folgendes umfasst:
Senden (S1001) einer Registrierungsnachricht durch die erste Vorrichtung an den Server, wobei die Registrierungsnachricht Benutzeridentitätsinformationen und mindestens eine Kommunikationsnummer eines Benutzers umfasst; und
Empfangen (S1002) durch die erste Vorrichtung einer ersten Benutzerkennung, die vom Server gemäß der Registrierungsnachricht erzeugt wird.

3. Verfahren nach Anspruch 2, wobei:
die Registrierungsnachricht ferner Informationen zu einer Validitätsperiode umfasst oder
nach dem Empfangen durch die erste Vorrichtung einer ersten Benutzerkennung, die vom Server gemäß der Registrierungsnachricht erzeugt wird, das Verfahren ferner Folgendes umfasst:
Senden (S1003) von Informationen zu einer Validitätsperiode durch die erste Vorrichtung an den Server, wobei
die Informationen zur Validitätsperiode vom Server verwendet werden, um eine Validitätsperiode für die erste Benutzerkennung einzustellen.

4. Verfahren nach Anspruch 2 oder 3, wobei das Sitzungsmenü verwendet wird, um mindestens eine Kommunikationsfähigkeit zu präsentieren, die sowohl der Benutzer, der der ersten Benutzerkennung entspricht, als auch der Benutzer, der der zweiten Benutzerkennung entspricht, besitzt.

5. Kommunikationseinrichtungsverfahren, wobei das Verfahren Folgendes umfasst:
Abfragen (S201) durch einen Server gemäß einer empfangenen Abfragenachricht, die von einer ersten Vorrichtung gemäß einer zweiten Benutzerkennung gesendet wird, von Informationen zu einer Validitätsperiode der zweiten Benutzerkennung und mindestens einer Kommunikationsfähigkeit eines Benutzers, der der zweiten Benutzerkennung entspricht, wobei die Informationen zur Validitätsperiode verwendet werden, um zu bestimmen, ob die zweite Benutzerkennung in eine Validitätsperiode fällt, wobei die zweite Benutzerkennung von der ersten Vorrichtung durch Abtasten erfasst wird und die zweite Benutzerkennung eine Bildkennung ist, wobei zugehörige Informationen des Benutzers, der der zweiten Benutzerkennung entspricht, für einen Benutzer der ersten Vorrichtung nicht verfügbar sind;
wenn die zweite Benutzerkennung in die Validitätsperiode fällt, Erzeugen (S202) durch den Server eines Sitzungsmenüs gemäß der abgefragten mindestens einen Kommunikationsfähigkeit des Benutzers, der der zweiten Benutzerkennung entspricht, wobei das Sitzungsmenü verwendet wird, um die mindestens eine Kommunikationsfähigkeit des Benutzers, der der zweiten Benutzerkennung entspricht, zu präsentieren;
Senden (S203) des Sitzungsmenüs durch den Server an die erste Vorrichtung und
Einrichten (S204) durch den Server gemäß einer empfangenen Kommunikationseinrichtungsnachricht, die von der ersten Vorrichtung gemäß dem Sitzungsmenü gesendet wird, einer Kommunikation zwischen der ersten Vorrichtung und dem Benutzer, der der zweiten Benutzerkennung entspricht, wobei die Kommunikationseinrichtungsnachricht die mindestens eine Kommunikationsfähigkeit, die von der ersten Vorrichtung ausgewählt wird, umfasst;
wobei in einem gesamten Prozess der Benutzer der ersten Vorrichtung die zugehörigen Informationen des Benutzers, der der zweiten Benutzerkennung entspricht, nicht direkt erhalten kann.

6. Verfahren nach Anspruch 5, wobei das Verfahren ferner Folgendes umfasst:
wenn die zweite Benutzerkennung außerhalb der Validitätsperiode liegt, Senden einer Erinnerungsnachricht durch den Server an die erste Vorrichtung, wobei die Erinnerungsnachricht verwendet wird, um die erste Vorrichtung daran zu erinnern, dass die zweite Benutzerkennung außerhalb der Validitätsperiode liegt; oder
wenn die zweite Benutzerkennung außerhalb der Validitätsperiode liegt, Senden durch den Server einer Anforderungsnachricht an den Benutzer, der der zweiten Benutzerkennung entspricht, wobei die Anforderungsnachricht verwendet wird, um beim Benutzer, der der zweiten Benutzerkennung entspricht, anzufordern, es dem Server zu erlauben, eine Kommunikation zwischen der ersten Vorrichtung und dem Benutzer, der der zweiten Benutzerkennung entspricht, einzurichten.

7. Verfahren nach Anspruch 5 oder 6, wobei das Verfahren ferner Folgendes umfasst:
Erzeugen (S2001) durch den Server einer ersten Benutzerkennung gemäß einer Registrierungsnachricht, die von der ersten Vorrichtung gesendet wird, wobei die Registrierungsnachricht Benutzeridentitätsinformationen und mindestens eine Kommunikationsnummer eines Benutzers umfasst; und
Senden (S2002) der ersten Benutzerkennung durch den Server an die erste Vorrichtung.

8. Verfahren nach Anspruch 7, wobei
die Registrierungsnachricht ferner Informationen zu einer Validitätsperiode umfasst und der Server eine Validitätsperiode für die erste Benutzerkennung gemäß den Informationen zur Validitätsperiode einstellt; oder
nach dem Senden der ersten Benutzerkennung durch den Server an die erste Vorrichtung das Verfahren ferner Folgendes umfasst:
Empfangen (S2003) durch den Server von Informationen zu einer Validitätsperiode, die von der ersten Vorrichtung gesendet werden, und Einstellen durch den Server einer Validitätsperiode für die erste Benutzerkennung gemäß den Informationen zur Validitätsperiode.

9. Verfahren nach einem der Ansprüche 5 bis 8, wobei die Informationen zur Validitätsperiode eine einmalige Validität, eine zeitspannenbasierte Validität oder eine langfristige Validität umfassen.

10. Verfahren nach einem der Ansprüche 7 bis 9, wobei das Erzeugen durch den Server eines Sitzungsmenüs gemäß der abgefragten mindestens einen Kommunikationsfähigkeit des Benutzers, der der zweiten Benutzerkennung entspricht, speziell Folgendes umfasst:
Erzeugen durch den Server des Sitzungsmenüs gemäß der abgefragten mindestens einen Kommunikationsfähigkeit, die sowohl der Benutzer, der der zweiten Benutzerkennung entspricht, als auch der Benutzer, der der ersten Benutzerkennung entspricht, besitzt.

11. Vorrichtung (70), wobei die Vorrichtung (70) eine Abfragenachrichtensendeeinheit (701), eine Sitzungsmenüempfangseinheit (702), eine Kommunikationseinrichtungsnachrichtensendeeinheit (703) und eine Kommunikationseinrichtungseinheit (704) umfasst; wobei
die Abfragenachrichtensendeeinheit (701) dazu ausgelegt ist, durch Abtasten eine zweite Benutzerkennung zu erfassen und eine Abfragenachricht gemäß der zweiten Benutzerkennung an einen Server zu senden, wobei die zweite Benutzerkennung eine Bildkennung ist, wobei die Abfragenachricht vom Server verwendet wird, um mindestens eine Kommunikationsfähigkeit eines Benutzers, der der zweiten Benutzerkennung entspricht, abzufragen, wobei zugehörige Informationen des Benutzers, der der zweiten Benutzerkennung entspricht, für einen Benutzer der ersten Vorrichtung nicht verfügbar sind;
die Sitzungsmenüempfangseinheit (702) dazu ausgelegt ist, ein Sitzungsmenü zu empfangen, das vom Server gemäß der Abfragenachricht gesendet wird, wobei das Sitzungsmenü verwendet wird, um die mindestens eine Kommunikationsfähigkeit des Benutzers, der der zweiten Benutzerkennung entspricht, zu präsentieren;
die Kommunikationseinrichtungsnachrichtensendeeinheit (703) dazu ausgelegt ist, gemäß dem Sitzungsmenü eine Kommunikationseinrichtungsnachricht an den Server zu senden, wobei die Kommunikationseinrichtungsnachricht Informationen zur ausgewählten mindestens einen Kommunikationsfähigkeit umfasst; und
die Kommunikationseinrichtungseinheit (704) dazu ausgelegt ist, mittels einer Kommunikation, die vom Server gemäß der Kommunikationseinrichtungsnachricht eingerichtet wird, eine Kommunikation mit dem Benutzer, der der zweiten Benutzerkennung entspricht, einzurichten, oder dazu ausgelegt ist, gemäß der ausgewählten mindestens einen Kommunikationsfähigkeit eine Kommunikation mit dem Benutzer, der der zweiten Benutzerkennung entspricht, einzurichten;
wobei in einem gesamten Prozess der Benutzer der ersten Vorrichtung die zugehörigen Informationen des Benutzers, der der zweiten Benutzerkennung entspricht, nicht direkt erhalten kann.

12. Vorrichtung nach Anspruch 11, wobei das Vorrichtung ferner Folgendes umfasst:
eine Registrierungsnachrichtensendeeinheit (705), die dazu ausgelegt ist, eine Registrierungsnachricht an den Server zu senden, wobei die Registrierungsnachricht Benutzeridentitätsinformationen und mindestens eine Kommunikationsnummer eines Benutzers umfasst; und
eine Benutzerkennungsempfangseinheit (706), die dazu ausgelegt ist, eine erste Benutzerkennung, die vom Server gemäß der Registrierungsnachricht erzeugt wird, zu empfangen.

13. Vorrichtung nach Anspruch 12, wobei:
die Registrierungsnachrichtensendeeinheit (705) ferner dazu ausgelegt ist, Informationen zu einer Validitätsperiode zu senden; oder
die Vorrichtung (70) ferner eine Validitätsperiodensendeeinheit umfasst, die zu Folgendem ausgelegt ist: nachdem die Benutzerkennungsempfangseinheit die erste Benutzerkennung empfangen hat, Senden von Informationen zu einer Validitätsperiode an den Server; wobei
die Informationen zu einer Validitätsperiode vom Server verwendet werden, um eine Validitätsperiode für die erste Benutzerkennung einzustellen;
die Abfragenachrichtensendeeinheit (701) ferner dazu ausgelegt ist, gemäß einer zweiten Benutzerkennung eine Abfragenachricht an den Server zu senden, um Informationen zu einer Validitätsperiode der zweiten Benutzerkennung abzufragen.

14. Server (80), wobei der Server eine Abfrageeinheit (801), eine Sitzungsmenüerzeugungseinheit (802), eine Sitzungsmenüsendeeinheit (803) und eine Kommunikationseinrichtungseinheit (804) umfasst; wobei
die Abfrageeinheit (801) dazu ausgelegt ist, gemäß einer empfangenen Abfragenachricht, die von einer ersten Vorrichtung gemäß einer zweiten Benutzerkennung gesendet wird, Informationen zu einer Validitätsperiode der zweiten Benutzerkennung und mindestens eine Kommunikationsfähigkeit eines Benutzers, der der zweiten Benutzerkennung entspricht, abzufragen, wobei die Informationen zur Validitätsperiode verwendet werden, um zu bestimmen, ob die zweite Benutzerkennung in eine Validitätsperiode fällt, wobei die zweite Benutzerkennung von der ersten Vorrichtung durch Abtasten erfasst wird und die zweite Benutzerkennung eine Bildkennung ist, wobei zugehörige Informationen des Benutzers, der der zweiten Benutzerkennung entspricht, für einen Benutzer der ersten Vorrichtung nicht verfügbar sind;
die Sitzungsmenüerzeugungseinheit (802) zu Folgendem ausgelegt ist: wenn die zweite Benutzerkennung in die Validitätsperiode fällt, Erzeugen eines Sitzungsmenüs gemäß der abgefragten mindestens einen Kommunikationsfähigkeit des Benutzers, der der zweiten Benutzerkennung entspricht, wobei das Sitzungsmenü verwendet wird, um die mindestens eine Kommunikationsfähigkeit des Benutzers, der der zweiten Benutzerkennung entspricht, zu präsentieren;
die Sitzungsmenüsendeeinheit (803) dazu ausgelegt ist, das Sitzungsmenü an die erste Vorrichtung zu senden; und
die Kommunikationseinrichtungseinheit (804) dazu ausgelegt ist, gemäß einer empfangenen Kommunikationseinrichtungsnachricht, die von der ersten Vorrichtung gemäß dem Sitzungsmenü gesendet wird, zwischen der ersten Vorrichtung und dem Benutzer, der der zweiten Benutzerkennung entspricht, eine Kommunikation einzurichten, wobei die Kommunikationseinrichtungsnachricht die mindestens eine Kommunikationsfähigkeit, die von der ersten Vorrichtung ausgewählt wird, umfasst; wobei in einem gesamten Prozess der Benutzer der ersten Vorrichtung die zugehörigen Informationen des Benutzers, der der zweiten Benutzerkennung entspricht, nicht direkt erhalten kann.

15. Server nach Anspruch 14, wobei der Server ferner Folgendes umfasst:
eine Erinnerungsnachrichtensendeeinheit (805), die zu Folgendem ausgelegt ist: wenn die zweite Benutzerkennung außerhalb der Validitätsperiode liegt, Senden einer Erinnerungsnachricht an die erste Vorrichtung, wobei die Erinnerungsnachricht verwendet wird, um die erste Vorrichtung daran zu erinnern, dass die zweite Benutzerkennung außerhalb der Validitätsperiode liegt; und/oder
eine Anforderungsnachrichtensendeeinheit (806), die zu Folgendem ausgelegt ist: wenn die zweite Benutzerkennung außerhalb der Validitätsperiode liegt, Senden einer Anforderungsnachricht an den Benutzer, der der zweiten Benutzerkennung entspricht, wobei die Anforderungsnachricht verwendet wird, um beim Benutzer, der der zweiten Benutzerkennung entspricht, anzufordern, es dem Server zu erlauben, eine Kommunikation zwischen der ersten Vorrichtung und dem Benutzer, der der zweiten Benutzerkennung entspricht, einzurichten.

## Revendications

1. Procédé d'établissement de communication, lequel procédé comprend les étapes suivantes :
acquisition, par un premier dispositif, d'un deuxième identifiant d'utilisateur par lecture optique, le deuxième identifiant d'utilisateur constituant un identifiant image ;
envoi (S101), par le premier dispositif, d'un message de sollicitation à un serveur selon le deuxième identifiant d'utilisateur, le message de sollicitation étant utilisé par le serveur pour solliciter au moins une capacité de communication d'un utilisateur correspondant au deuxième identifiant d'utilisateur, des informations connexes relatives à l'utilisateur correspondant au deuxième identifiant d'utilisateur n'étant pas mises à la disposition d'un utilisateur du premier dispositif ;
réception (S 102), par le premier dispositif, d'un menu de session envoyé par le serveur selon le message de sollicitation, le menu de session servant à présenter l'au moins une capacité de communication de l'utilisateur correspondant au deuxième identifiant d'utilisateur ;
envoi (S103), par le premier dispositif, d'un message d'établissement de communication au serveur selon le menu de session, le message d'établissement de communication comprenant des informations concernant l'au moins une capacité de communication sélectionnée ; et
communication (S104), par le premier dispositif au moyen d'une communication établie par le serveur selon l'au moins une capacité de communication sélectionnée, avec l'utilisateur correspondant au deuxième identifiant d'utilisateur ; ou
établissement, par le premier dispositif selon l'au moins une capacité de communication sélectionnée, d'une communication avec l'utilisateur correspondant au deuxième identifiant d'utilisateur ;
dans l'ensemble d'un processus, l'utilisateur du premier dispositif se voyant dans l'impossibilité d'obtenir directement les informations connexes relatives à l'utilisateur correspondant au deuxième identifiant d'utilisateur.

2. Procédé selon la revendication 1, lequel procédé comprend en outre les étapes suivantes :
envoi (S1001), par le premier dispositif, d'un message d'enregistrement au serveur, le message d'enregistrement comprenant des informations d'identité d'utilisateur et au moins un numéro de communication d'un utilisateur ; et
réception (S1002), par le premier dispositif, d'un premier identifiant d'utilisateur généré par le serveur selon le message d'enregistrement.

3. Procédé selon la revendication 2,
dans lequel le message d'enregistrement comprend en outre des informations de période de validité ; ou
lequel procédé comprend en outre, suite à l'étape de réception, par le premier dispositif, d'un premier identifiant d'utilisateur généré par le serveur selon le message d'enregistrement, l'étape suivante :
envoi (S1003), par le premier dispositif, d'informations de période de validité au serveur ;
les informations de période de validité étant utilisées par le serveur pour définir une période de validité pour le premier identifiant d'utilisateur.

4. Procédé selon la revendication 2 ou 3, dans lequel le menu de session sert à présenter au moins une capacité de communication détenue à la fois par l'utilisateur correspondant au premier identifiant d'utilisateur et par l'utilisateur correspondant au deuxième identifiant d'utilisateur.

5. Procédé d'établissement de communication, lequel procédé comprend les étapes suivantes :
sollicitation (S201), par un serveur selon un message de sollicitation reçu envoyé par un premier dispositif selon un deuxième identifiant d'utilisateur, d'informations de période de validité relatives au deuxième identifiant d'utilisateur et d'au moins une capacité de communication d'un utilisateur correspondant au deuxième identifiant d'utilisateur, les informations de période de validité servant à déterminer si le deuxième identifiant d'utilisateur s'inscrit ou non dans une période de validité, le deuxième identifiant d'utilisateur étant acquis par le premier dispositif par lecture optique et le deuxième identifiant d'utilisateur constituant un identifiant image, des informations connexes relatives à l'utilisateur correspondant au deuxième identifiant d'utilisateur n'étant pas mises à la disposition d'un utilisateur du premier dispositif ;
si le deuxième identifiant d'utilisateur s'inscrit dans la période de validité, génération (S202), par le serveur, d'un menu de session selon l'au moins une capacité de communication sollicitée de l'utilisateur correspondant au deuxième identifiant d'utilisateur, le menu de session servant à présenter l'au moins une capacité de communication de l'utilisateur correspondant au deuxième identifiant d'utilisateur ;
envoi (S203), par le serveur, du menu de session au premier dispositif ; et
établissement (S204), par le serveur selon un message d'établissement de communication reçu envoyé par le premier dispositif selon le menu de session, d'une communication entre le premier dispositif et l'utilisateur correspondant au deuxième identifiant d'utilisateur, le message d'établissement de communication comprenant l'au moins une capacité de communication sélectionnée par le premier dispositif ;
dans l'ensemble d'un processus, l'utilisateur du premier dispositif se voyant dans l'impossibilité d'obtenir directement les informations connexes relatives à l'utilisateur correspondant au deuxième identifiant d'utilisateur.

6. Procédé selon la revendication 5, lequel procédé comprend en outre les étapes suivantes :
si le deuxième identifiant d'utilisateur sort de la période de validité, envoi, par le serveur, d'un message de rappel au premier dispositif, le message de rappel servant à rappeler au premier dispositif que le deuxième identifiant d'utilisateur sort de la période de validité ; ou
si le deuxième identifiant d'utilisateur sort de la période de validité, envoi, par le serveur, d'un message de demande à l'utilisateur correspondant au deuxième identifiant d'utilisateur, le message de demande servant à demander à l'utilisateur correspondant au deuxième identifiant d'utilisateur d'autoriser le serveur à établir une communication entre le premier dispositif et l'utilisateur correspondant au deuxième identifiant d'utilisateur.

7. Procédé selon la revendication 5 ou 6, lequel procédé comprend en outre les étapes suivantes :
génération (S2001), par le serveur, d'un premier identifiant d'utilisateur selon un message d'enregistrement envoyé par le premier dispositif, le message d'enregistrement comprenant des informations d'identité d'utilisateur et au moins un numéro de communication d'un utilisateur ; et
envoi (S2002), par le serveur, du premier identifiant d'utilisateur au premier dispositif.

8. Procédé selon la revendication 7,
dans lequel le message d'enregistrement comprend en outre des informations de période de validité, et le serveur définit une période de validité pour le premier identifiant d'utilisateur selon les informations de période de validité ; ou
lequel procédé comprend en outre, suite à l'étape d'envoi, par le serveur, du premier identifiant d'utilisateur au premier dispositif, l'étape suivante :
réception (S2003), par le serveur, d'informations de période de validité envoyées par le premier dispositif, et définition, par le serveur, d'une période de validité pour le premier identifiant d'utilisateur selon les informations de période de validité.

9. Procédé selon l'une quelconque des revendications 5 à 8, dans lequel les informations de période de validité comprennent une validité ponctuelle, une validé basée sur un laps de temps ou une validité à long terme.

10. Procédé selon l'une quelconque des revendications 7 à 9, dans lequel l'étape de génération, par le serveur, d'un menu de session selon l'au moins une capacité de communication sollicitée de l'utilisateur correspondant au deuxième identifiant d'utilisateur comprend plus particulièrement l'étape suivante :
génération, par le serveur, du menu de session selon l'au moins une capacité de communication sollicitée détenue à la fois par l'utilisateur correspondant au deuxième identifiant d'utilisateur et par l'utilisateur correspondant au premier identifiant d'utilisateur.

11. Dispositif (70), lequel dispositif (70) comprend une unité d'envoi de message de sollicitation (701), une unité de réception de menu de session (702), une unité d'envoi de message d'établissement de communication (703) et une unité d'établissement de communication (704) ;
l'unité d'envoi de message de sollicitation (701) étant configurée pour acquérir un deuxième identifiant d'utilisateur par lecture optique et envoyer un message de sollicitation à un serveur selon le deuxième identifiant d'utilisateur, le deuxième identifiant d'utilisateur constituant un identifiant image, le message de sollicitation étant utilisé par le serveur pour solliciter au moins une capacité de communication d'un utilisateur correspondant au deuxième identifiant d'utilisateur, des informations connexes relatives à l'utilisateur correspondant au deuxième identifiant d'utilisateur n'étant pas mises à la disposition d'un utilisateur du premier dispositif ;
l'unité de réception de menu de session (702) étant configurée pour recevoir un menu de session envoyé par le serveur selon le message de sollicitation, le menu de session servant à présenter l'au moins une capacité de communication de l'utilisateur correspondant au deuxième identifiant d'utilisateur ;
l'unité d'envoi de message d'établissement de communication (703) étant configurée pour envoyer un message d'établissement de communication au serveur selon le menu de session, le message d'établissement de communication comprenant des informations concernant l'au moins une capacité de communication sélectionnée ; et l'unité d'établissement de communication (704) étant configurée pour établir, au moyen d'une communication établie par le serveur selon le message d'établissement de communication, une communication avec l'utilisateur correspondant au deuxième identifiant d'utilisateur, ou configurée pour établir, selon l'au moins une capacité de communication sélectionnée, une communication avec l'utilisateur correspondant au deuxième identifiant d'utilisateur ;
dans l'ensemble d'un processus, l'utilisateur du premier dispositif se voyant dans l'impossibilité d'obtenir directement les informations connexes relatives à l'utilisateur correspondant au deuxième identifiant d'utilisateur.

12. Dispositif selon la revendication 11, lequel dispositif comprend en outre :
une unité d'envoi de message d'enregistrement (705), configurée pour envoyer un message d'enregistrement au serveur, le message d'enregistrement comprenant des informations d'identité d'utilisateur et au moins un numéro de communication d'un utilisateur ; et
une unité de réception d'identifiant d'utilisateur (706), configurée pour recevoir un premier identifiant d'utilisateur généré par le serveur selon le message d'enregistrement.

13. Dispositif selon la revendication 12,
dans lequel l'unité d'envoi de message d'enregistrement (705) est configurée en outre pour envoyer une information de période de validité ; ou
lequel dispositif (70) comprend en outre une unité d'envoi de période de validité, configurée pour : après que l'unité de réception d'identifiant d'utilisateur a reçu le premier identifiant d'utilisateur, envoyer une information de période de validité au serveur ;
l'information de période de validité étant utilisée par le serveur pour définir une période de validité pour le premier identifiant d'utilisateur ;
l'unité d'envoi de message de sollicitation (701) étant configurée en outre pour envoyer un message de sollicitation au serveur selon un deuxième identifiant d'utilisateur aux fins de solliciter des informations de période de validité relatives au deuxième identifiant d'utilisateur.

14. Serveur (80), lequel serveur comprend une unité de sollicitation (801), une unité de génération de menu de session (802), une unité d'envoi de menu de session (803) et une unité d'établissement de communication (804) ;
l'unité de sollicitation (801) étant configurée pour solliciter, selon un message de sollicitation reçu envoyé par un premier dispositif selon un deuxième identifiant d'utilisateur, des informations de période de validité relatives au deuxième identifiant d'utilisateur et au moins une capacité de communication d'un utilisateur correspondant au deuxième identifiant d'utilisateur, les informations de période de validité servant à déterminer si le deuxième identifiant d'utilisateur s'inscrit ou non dans une période de validité, le deuxième identifiant d'utilisateur étant acquis par le premier dispositif par lecture optique et le deuxième identifiant d'utilisateur constituant un identifiant image, des informations connexes relatives à l'utilisateur correspondant au deuxième identifiant d'utilisateur n'étant pas mises à la disposition d'un utilisateur du premier dispositif ;
l'unité de génération de menu de session (802) étant configurée pour : si le deuxième identifiant d'utilisateur s'inscrit dans la période de validité, générer un menu de session selon l'au moins une capacité de communication sollicitée de l'utilisateur correspondant au deuxième identifiant d'utilisateur, le menu de session servant à présenter l'au moins une capacité de communication de l'utilisateur correspondant au deuxième identifiant d'utilisateur ;
l'unité d'envoi de menu de session (803) étant configurée pour envoyer le menu de session au premier dispositif ; et
l'unité d'établissement de communication (804) étant configurée pour établir, selon un message d'établissement de communication reçu envoyé par le premier dispositif selon le menu de session, une communication entre le premier dispositif et l'utilisateur correspondant au deuxième identifiant d'utilisateur, le message d'établissement de communication comprenant l'au moins une capacité de communication sélectionnée par le premier dispositif ;
dans l'ensemble d'un processus, l'utilisateur du premier dispositif se voyant dans l'impossibilité d'obtenir directement les informations connexes relatives à l'utilisateur correspondant au deuxième identifiant d'utilisateur.

15. Serveur selon la revendication 14, lequel serveur comprend en outre :
une unité d'envoi de message de rappel (805), configurée pour : si le deuxième identifiant d'utilisateur sort de la période de validité, envoyer un message de rappel au premier dispositif, le message de rappel servant à rappeler au premier dispositif que le deuxième identifiant d'utilisateur sort de la période de validité ; et/ou
une unité d'envoi de message de demande (806), configurée pour : si le deuxième identifiant d'utilisateur sort de la période de validité, envoyer un message de demande à l'utilisateur correspondant au deuxième identifiant d'utilisateur, le message de demande servant à demander à l'utilisateur correspondant au deuxième identifiant d'utilisateur d'autoriser le serveur à établir une communication entre le premier dispositif et l'utilisateur correspondant au deuxième identifiant d'utilisateur.
